# FASCICULE DE BREVET EUROPEEN

(11) **EP 4 051 890 B1**
(45) Date de publication et mention de la délivrance du brevet: **06.05.2026**
(21) Numéro de dépôt: 20797474.2
(22) Date de dépôt: 28.10.2020
(51) Int. Cl.: F02B 29/04, F02B 37/013, F02B 47/04, F02B 51/02, F02M 27/02, F02M 35/10, F02M 35/16, F23C 13/00, F02B 37/00

(54) **MOTEUR À FAIBLE ÉMISSION DE PARTICULES**
MOTOR MIT NIEDRIGER PARTIKELEMISSION
ENGINE WITH LOW PARTICLES EMISSION

(30) Priorité: 28.10.2019 FR 1912070
(43) Date de publication de la demande: 07.09.2022
(73) Titulaire: Ecosoftec, 73800 Sainte-Hélène-du-Lac (FR)
(72) Inventeur: RAVIX, Jean-Pierre, 73800 PLANAISE (FR)
(74) Mandataire: Novaimo
(86) Numéro de dépôt international: PCT/EP2020/080300
(87) Numéro de publication internationale: WO 2021/083965

(56) Documents cités:
- EP-A1- 2 511 510
- WO-A1-01/51800
- WO-A1-2010/098746
- WO-A1-2018/015294
- FR-A1- 2 971 326
- FR-A1- 3 059 565
- US-A1- 2005 053 875

## Description

La présente invention porte sur un moteur à faible émission de particules, et particulièrement un très grand moteur turbo diesel destiné à la propulsion d'un navire. Elle porte aussi sur un procédé de réduction des émissions de particules d'un tel moteur.

Les très grands moteurs turbo diesel destinés à la propulsion d'un navire sont des moteurs à deux temps, dits lents, ou à quatre temps, dits semi rapides. Ces moteurs peuvent générer une puissance de 1 MW à presque 100 MW pour les plus gros. Ils sont consommateurs de combustibles liquides, désignés par le terme générique de « fiouls », incluant les fiouls lourds (FOL ou HFO -Heavy Fuel Oil- en anglais), les fiouls intermédiaires, dénommés par le sigle MDO (pour la désignation anglaise de « Marine Diesel Oil »), et les fiouls légers, dont la viscosité et la teneur en soufre sont faibles, ces fiouls légers étant proches de ceux utilisés à terre pour les applications domestiques. Ces moteurs présentent l'inconvénient d'émettre des composants provenant d'une combustion imparfaite, sous forme de particules appelées aussi « imbrûlés solides », qui contiennent du carbone non oxydé, qu'on qualifie dans le langage courant de suies, et « d'imbrûlés gazeux ». Les premiers consistent en des particules organiques et en particulier des particules ultrafines, de carbone suie, plus souvent dénommées par leur terme anglais de « black carbon », d'une taille allant de quelques nanomètres jusqu'à une dizaine de micromètres. La taille moyenne des particules émises par un tel moteur diesel est de l'ordre de 100 nm. Les composants gazeux provenant des « imbrûlés gazeux » sont quant à eux aussi de différentes natures, incluant le monoxyde de carbone, les hydrocarbures imbrûlés, les hydrocarbures aromatiques polycycliques, les composés organiques volatils, les composés organiques non volatiles non méthaniques. Ces différentes émissions susmentionnées, provenant de la combustion imparfaite des moteurs, sous forme de particules solides ou de composants gazeux, génèrent des effets nombreux et graves sur la santé humaine.

Il existe des solutions dans le secteur automobile pour traiter les émissions polluantes de type particules solides, émises par des moteurs de petites tailles. Elles consistent en une approche postcombustion, reposent en particulier sur l'utilisation de filtres. Mais ces solutions de filtration sont difficilement transposables, du fait des facteurs d'échelle et de coûts, sur tous les moteurs existants, notamment les moteurs de navire susmentionnés. Ces solutions présentent de plus l'inconvénient de dégrader le rendement thermodynamique du moteur, ce qui induit une surconsommation.

Les documents WO2010098746, WO0151800, EP2511510 et US2005053875 divulguent différents exemples de réalisation de moteurs comprenant des dispositifs catalytiques ou de dispositifs catalytiques pour moteurs, appliqués à différents domaines techniques.

En parallèle, une solution de l'état de la technique est décrite dans le document FR2837214 dans un autre domaine, qui préconise d'une part de mélanger des vapeurs catalytiques de type méthyl cyclopentadiényle manganèse tricarbonyle à l'air de combustion d'une chaudière, et d'autre part d'injecter des fines gouttelettes de cet agent catalytique directement dans le combustible, en vue d'obtenir une réduction des oxydes de soufre et d'azote en sortie de la chaudière. Cette solution permet d'obtenir une diminution significative de la pollution générée par la combustion d'une chaudière. Ce document concerne ainsi le domaine particulier des chaudières, et enseigne qu'un catalyseur peut réduire la pollution des émissions, ces émissions visées étant des composants soufrés.

Un objet général de l'invention est de proposer une solution permettant d'améliorer les moteurs, plus particulièrement les très gros moteurs diesel de navires, en réduisant les particules nocives émises par ces moteurs.

A cet effet, l'invention repose sur un moteur pour navire, comprenant un collecteur d'admission, caractérisé en ce qu'il comprend un dispositif catalytique mettant en œuvre le mélange d'un précurseur de catalyseur qui comprend un composé organométallique, notamment un composant méthyl cyclopentadiényle manganèse tricarbonyle, avec un comburant, et en ce que le dispositif catalytique est agencé en amont d'un dispositif de compression, de sorte que ce dispositif de compression augmente la pression du mélange comprenant le comburant et le précurseur de catalyseur à une valeur supérieure ou égale à 2 bars, voire supérieure ou égale à 4 bars, cette valeur de pression étant mesurée au niveau de son entrée dans le collecteur d'admission.

Le moteur pour navire est un moteur turbo comprenant une turbosoufflante, le dispositif de compression étant cette turbosoufflante, et le dispositif catalytique étant positionné en amont de la turbosoufflante de sorte que ledit mélange comprenant le comburant et le précurseur de catalyseur est conduit de la sortie du dispositif catalytique à la turbosoufflante, où il subit une augmentation de pression, puis de la turbosoufflante vers le collecteur d'admission.

Le moteur pour navire comprend un échangeur de chaleur réfrigérant disposé entre la turbosoufflante et le collecteur d'admission pour refroidir le mélange comprenant le comburant et le précurseur de catalyseur à une valeur de température inférieure ou égale à 50°C, voire inférieure ou égale à 40 °C.

Le dispositif de compression peut comprendre au moins deux turbocompresseurs disposés en série. Le moteur pour navire peut comprendre au moins un échangeur de chaleur disposé entre deux turbocompresseurs pour refroidir le mélange comprenant le comburant et le précurseur de catalyseur.

Ce moteur peut être un moteur turbo comprenant une turbosoufflante, le mélange comprenant le comburant et le précurseur de catalyseur sortant du dispositif catalytique peut être relié à une conduite d'admission vers le collecteur d'admission par une zone d'injection disposé en aval de la turbosoufflante et d'un échangeur réfrigérant.

La zone d'injection peut comprendre une raquette de diffusion comprenant un corps métallique creux multi-percés par plusieurs orifices en croix et positionnée dans un plan perpendiculaire au sens du flux comburant, pour permettre d'obtenir un mélange des vapeurs de précurseur de catalyseur avec le flux comburant.

Le dispositif catalytique peut comprendre un media comprenant des fibres de celluloses et/ou des fibres tissées, comme certains cotons, sur lequel le précurseur de catalyseur est injecté sous forme liquide et est évaporé et mélangé à un comburant au contact dudit media.

Le dispositif catalytique peut comprendre un réservoir de précurseur de catalyseur liquide, et peut être configuré pour l'évaporation au moins partielle dudit précurseur de catalyseur au sein du comburant.

Le précurseur de catalyseur liquide peut comprendre une concentration d'organométallique ou de méthyl cyclopentadiényle manganèse tricarbonyle supérieure ou égale à 90% du poids total du précurseur de catalyseur.

Le moteur pour navire peut être un moteur de puissance comprise entre 1 MW et 100 MW.

L'invention porte aussi sur un procédé de réduction des émissions de particules d'un moteur de navire, caractérisé en ce qu'il comprend la mise en œuvre des étapes suivantes :
- Mélange d'un précurseur de catalyseur qui comprend un composé organométallique, notamment un composant méthyl cyclopentadiényle manganèse tricarbonyle, avec un comburant, puis
- Augmentation de la pression dudit mélange par un dispositif de compression, à une valeur de pression supérieure ou égale à 2 bars, voire supérieure ou égale à 4 bars, puis
- Injection dudit mélange sous pression dans un collecteur d'admission pour une chambre de combustion d'un moteur.

Ces objets, caractéristiques et avantages de la présente invention seront exposés en détail dans la description suivante d'un mode d'exécution particulier fait à titre non-limitatif en relation avec les figures jointes parmi lesquelles :
[Fig. 1] La figure 1 représente schématiquement un moteur selon un mode de réalisation de l'invention.
[Fig. 2] La figure 2 illustre des courbes d'évolution de la pression en fonction de l'angle du vilebrequin du moteur selon le mode de réalisation de l'invention en comparaison avec un moteur de l'état de la technique.
[Fig. 3] La figure 3 représente schématiquement une variante du moteur selon un mode de réalisation de l'invention.

De manière avantageuse, il a été découvert que l'utilisation d'un précurseur d'un catalyseur liquide de type organométallique, notamment un précurseur d'un catalyseur qui comprend du méthyl cyclopentadiényle manganèse tricarbonyle, apporte une réduction surprenante des particules émises par les très gros moteurs de navires, sous réserve d'une utilisation dans des conditions particulières, tout en améliorant le rendement de tels moteurs. Ces résultats surprenants n'étaient pas envisagés après l'implémentation d'un tel catalyseur dans une chaudière pour réduire les émissions soufrées.

Cette utilisation va être détaillée dans le cadre d'un mode de réalisation particulier ci-après.

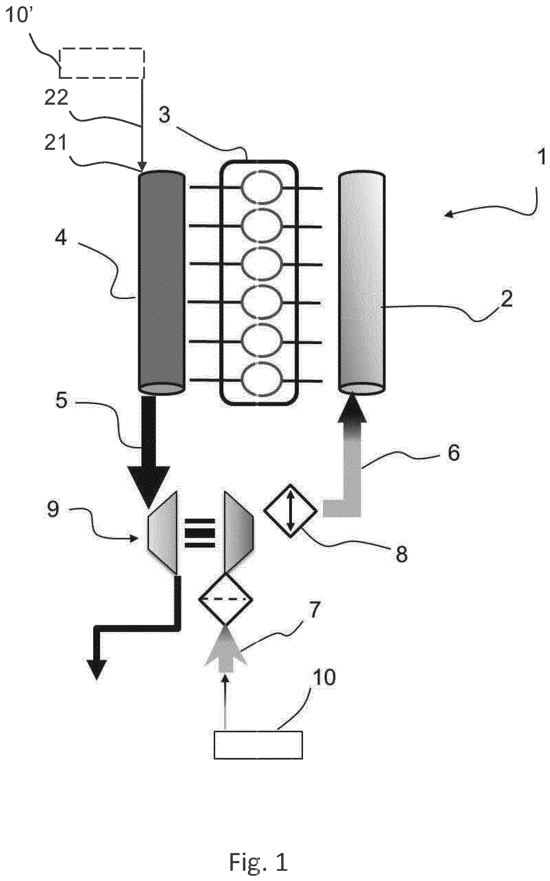

La figure 1 représente schématiquement un très gros moteur 1 turbo diesel pour navire selon un mode de réalisation de l'invention. Ce moteur 1 comprend de manière connue un collecteur d'admission 2, une chambre de combustion 3 (cylindres), un collecteur d'échappement 4. Il comprend de plus une turbosoufflante 9, pour la fonction turbo, actionnée par les gaz d'échappement guidés par une conduite d'échappement 5, du collecteur d'échappement 4 vers la turbosoufflante 9. Cette turbosoufflante permet d'augmenter la pression du comburant, c'est-à-dire de l'air dans ce mode de réalisation, avant son arrivée dans le collecteur d'admission 2 par une conduite d'admission 6.

Selon le mode de réalisation, le moteur comprend un dispositif catalytique 10 disposé en amont de la turbosoufflante 9. Le dispositif catalytique 10 met en œuvre le mélange d'un précurseur du catalyseur susmentionné au sein de l'air de combustion. Ce dispositif catalytique 10 est positionné en amont de la turbosoufflante 9 de sorte que le mélange comprenant l'air (ou tout autre gaz prévu comme comburant) et le précurseur de catalyseur est ensuite guidé au travers la turbosoufflante 9.

Le dispositif catalytique 10 peut être du type de celui décrit dans le document FR3059565, permettant l'évaporation du précurseur de catalyseur liquide puis son mélange et transport au sein de l'air de combustion. En sortie du dispositif catalytique 10, l'air chargé de précurseur de catalyseur est dirigé par une conduite 7 vers la turbosoufflante 9.

Dans ce mode de réalisation, le dispositif catalytique 10 comprend un sous-ensemble hydraulique, non représenté, comprenant un réservoir pour stocker le précurseur de catalyseur. Ce réservoir est monté au-dessus d'un bac de rétention. Ces deux éléments sont adaptés pour le stockage d'un précurseur d'un catalyseur sous forme liquide, notamment un organométallique tel que mentionné précédemment. Un dispositif de détection du niveau de liquide, notamment un détecteur de niveau, est positionné sur le haut du réservoir de sorte à connaître la quantité de précurseur de catalyseur disponible dans le réservoir. Dans le mode de réalisation présenté, le détecteur de niveau permet le déclenchement d'une alerte lorsque le stock de précurseur de catalyseur descend sous une valeur de seuil prédéfinie. Ce sous-ensemble hydraulique est relié à un sous-ensemble aéraulique, dans lequel le précurseur de catalyseur liquide peut être évaporé et mélangé dans de l'air. A titre d'exemple, un précurseur de catalyseur qui comprend du méthyl cyclopentadiényle manganèse tricarbonyle devient matière active à une température de l'ordre de 230 à 240°C dans les conditions de pression du moteur 1. Cette opération est avantageusement agencée par l'intermédiaire d'un média comprenant des fibres de celluloses et/ou des fibres tissées, comme certains cotons. En variante, cette évaporation et ce mélange peut être obtenu par tout autre moyen.

Selon l'invention, le mélange formé par l'air comprenant le précurseur de catalyseur est ensuite monté en pression au sein de la turbosoufflante 9, jusqu'à une valeur relative de 5 bars, selon l'invention supérieure ou égale à 2 bars, voire supérieure ou égale à 4 bars. Cette pression est avantageusement comprise entre 2 et 6 bars, voire entre 4 et 6 bars. Le dispositif catalytique 10 est positionné en amont de la turbosoufflante 9 et cette dernière forme un dispositif de compression du mélange comprenant le comburant et le précurseur de catalyseur. A noter que, dans l'ensemble de la présente description, les unités renseignées en bars font référence à des bars absolus.

Il est également entendu que, dans l'ensemble de la présente description, on entend par « dispositif de compression » un dispositif présentant notamment un taux de compression supérieur à 1.5, voire supérieur à 4. Selon l'invention, il permet d'élever la pression du mélange depuis une valeur proche de la pression atmosphérique à une pression supérieure ou égale à 2 bars, voire supérieure ou égale à 4 bars, selon les valeurs mentionnées ci-dessus.

La turbosoufflante a aussi pour effet d'augmenter la température de l'air comprenant le catalyseur jusqu'à une valeur comprise pouvant par exemple être comprise entre 150°C et 200°C. Pour cette raison, un échangeur réfrigérant 8 est agencé en sortie de la turbosoufflante 9, au niveau de la conduite d'admission 6, pour réduire cette température, selon l'invention sous une valeur de 50°C, voire sous une valeur de 40°C, par exemple vers 30°C.

Les conditions de pression et/ou de température ainsi obtenues permettent une répartition optimisée, voire idéale des vapeurs de catalyseur au sein du comburant, les répartissant de manière homogène dans ce comburant. Les vapeurs de catalyseur sont ainsi réparties selon une échelle moléculaire. Elles sont atomisées jusqu'à l'échelle moléculaire dans le comburant, qui est son vecteur de transport. Ainsi préparé, le précurseur organométallique offre la meilleure surface spécifique possible, la meilleure distribution dans le milieu gazeux du comburant. Cette solution lui permet d'agir selon un effet de type « spin », qui le rend hyper réactif et en totale disponibilité pour devenir sa forme catalytique.

Ce conditionnement du précurseur de catalyseur contribue à libérer le catalyseur de combustion dans la chambre de combustion, qui devient l'agent idéal et complémentaire pour agir avec le carbone présent dans cette chambre de combustion sous toutes ses formes solides et gazeuses, de façon à réaliser son oxydation thermique presque complète. Cet effet conduit à détruire les imbrûlés particulaires et gazeux par leur gazéification, ce qui transforme le carbone disponible en dioxyde de carbone. Le catalyseur ainsi conditionné est de plus actif tout au long de son parcours depuis la chambre de combustion jusqu'à la sortie des gaz d'échappement à l'air libre. Il est ainsi possible d'atteindre le résultat recherché grâce au catalyseur ainsi conditionné.

Le moteur est de plus avantageusement automatiquement piloté par une unité de contrôle, comprenant tout calculateur, sur la base des informations transmises par certains capteurs du moteur 1. Ces capteurs permettent par exemple de prendre en compte le niveau de charge du moteur, dont sa vitesse, le couple moteur, la pression en tête de cylindre, etc. Ce pilotage du moteur intègre avantageusement une régulation automatique de la quantité de catalyseur utilisé. Cette quantité est selon l'invention comprise entre 5 et 50 décagrammes de catalyseur par tonne de combustible.

Notamment, pour le composant méthyl cyclopentadiényle manganèse tricarbonyle, le précurseur de catalyseur compte pour quatre fois le poids du catalyseur, c'est-à-dire qu'il comprend par exemple une fraction volatile de l'ordre de 75% en masse. Selon l'invention, de sorte à obtenir une quantité de catalyseur comprise entre 5 et 50 décagrammes par tonne de combustible il sera nécessaire d'injecter entre 20 et 200 décagrammes de précurseur de catalyseur par tonne de combustible.

On mesure en sortie du moteur 1 selon le mode de réalisation, que la solution permet d'éliminer de :
- 50 à 99% des particules carbonées ;
- 70 à 99% des particules ultrafines dont la taille est comprise entre 30 et 150 nm environ ;
- 50 % à 99% des hydrocarbures imbrûlés issus de la combustion des fiouls lourds, lorsque leur concentration initiale est comprise entre 200 et 500 ppm, et de 30 % à 90% des hydrocarbures issus de la combustion des MDO lorsque leur concentration initiale est comprise entre 1 000 et 4500 ppm.

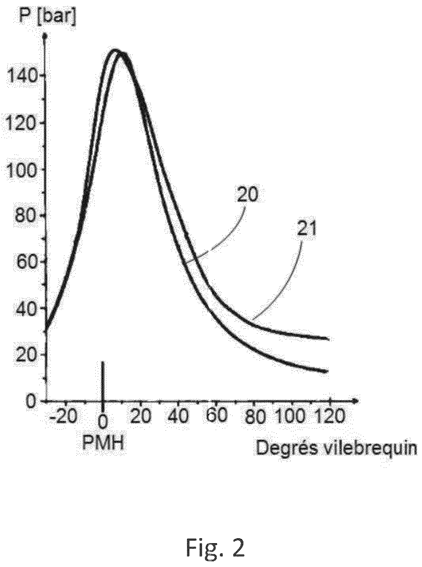

Par ailleurs, à même niveau de charge du moteur 1, l'oxydation thermique complète du carbone grâce à la catalyse avantageuse de l'invention, et la cinétique accélérée de la chimie de la combustion sous l'effet catalytique, engendrent une augmentation de la pression des gaz, qui évolue avec le nombre de degrés vilebrequin lors du parcours descendant du piston du moteur. La figure 2 illustre ce phénomène : la courbe 20 représente la pression des gaz dans un moteur de l'état de la technique, et la courbe 21 représente la pression des gaz dans un moteur identique mais équipé du dispositif catalytique selon le mode de réalisation de l'invention.

Un changement de réglage du moteur selon le mode de réalisation de l'invention permet de profiter de cet effet illustré par la figure 2, et de réduire la consommation du moteur tout en maintenant la puissance et le couple délivré à l'arbre. Cela se traduit par l'accroissement du rendement thermodynamique moyen du moteur, la consommation spécifique diminuant de 3 à 12 g/k.W.h, selon le type de moteur à deux ou à quatre temps et selon son niveau de charge compris entre 25% et 100%.

Un autre avantage indirect de l'élimination des suies à l'échappement du moteur selon le mode de réalisation est de maintenir propres les turbines de la turbosoufflantes 9. En effet, les surfaces métalliques de ces turbines ne sont plus grasses, ne sont plus encrassées. Cela limite, voire supprime, les opérations de maintenance préventives et curatives, et permet d'assurer une longévité optimale des aubes de la turbine. De plus, le rendement de la turbosoufflante 9 reste constamment maximal, ce qui participe à l'efficacité globale du moteur 1.

Finalement, le moteur 1 selon le mode de réalisation de l'invention permet non seulement de supprimer quasiment les émissions de particules polluantes, mais aussi d'améliorer le rendement du moteur.

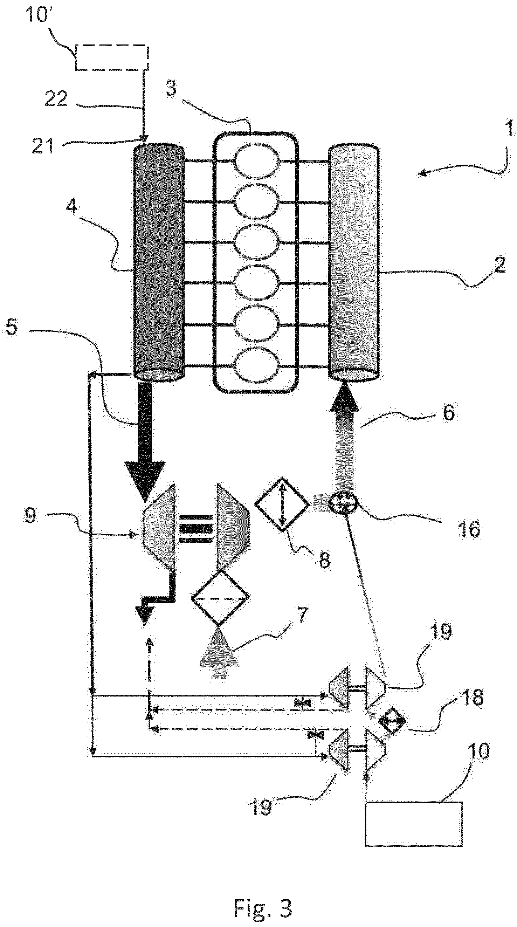

La figure 3 représente une variante de réalisation de l'invention, dans laquelle le dispositif catalytique 10 est agencé en aval de la turbosoufflante 9 du moteur 1. Par souci de simplicité, les mêmes références sont utilisées pour désigner des composants identiques ou similaires avec le mode de réalisation décrit en référence avec la figure 1.

Dans cette variante de réalisation, le dispositif catalytique 10 est donc positionné en aval de la turbosoufflante 9, et de son échangeur réfrigérant, c'est-à-dire que le mélange comprenant le comburant et le précurseur de catalyseur généré par le dispositif catalytique est injecté en aval de la turbosoufflante, au niveau d'une zone d'injection 16 de la conduite d'admission 6. Une raquette de diffusion peut être positionnée dans un plan perpendiculaire au sens du flux comburant au niveau de cette zone d'injection 16, pour permettre d'obtenir un mélange des vapeurs de précurseur de catalyseur avec le flux comburant. Une telle raquette peut être constituée d'un corps métallique creux multi-percés par plusieurs centaines d'orifices en croix, par exemple de 5 mm² maximum chacun, avec des bords sortants biseautés, répartis uniformément sur toutes les faces, sauf sur le bord d'attaque du flux. Dans cette variante de réalisation, deux turbocompresseurs 19 sont montés en série, entre le dispositif catalytique 10 et la zone d'injection 16. Un échangeur de chaleur 18 est de plus disposé entre les deux turbocompresseurs 19.

Les turbocompresseurs 19 sont actionnés par une partie des gaz d'échappement. Ils sont définis pour être dans leur plage d'efficacité optimale, tout en étant régulés exclusivement par une fraction des gaz d'échappement du moteur 1. Ils peuvent permettre de déplacer jusqu'à 500 Nm³ environ d'air porteur du catalyseur. En variante, le dispositif de compression pourrait comprendre plus de deux turbocompresseurs. Il pourrait aussi comprendre plusieurs échangeurs de chaleur pour refroidir le mélange comburant/catalyseur.

Le résultat obtenu est sensiblement identique à celui du mode de réalisation de la figure 1. En effet, cette configuration permet l'augmentation de la pression dans les mêmes plages de valeurs que précédemment, tout en maintenant la température sous une même valeur seuil, par l'intermédiaire de l'échangeur 18. Dans cette variante, l'ensemble des deux turbocompresseurs 19 forme un dispositif de compression du mélange comburant/précurseur de catalyseur.

Selon une variante de réalisation, compatible avec les deux réalisations des figures 1 et 3, le dispositif catalytique 10 comprend de plus des éléments matériels et/ou logiciel, permettant la mise en œuvre d'un procédé de mélange d'un précurseur d'un catalyseur pour amélioration du moteur 1, de manière automatique ou semi-automatique. La mise en œuvre du procédé de mélange se fait par l'intermédiaire de capteurs et d'actionneurs électromécaniques, alimentés électriquement et régulés au moyen d'un ou plusieurs automates programmables et contrôlables à distance.

En remarque, dans toutes les réalisations envisagées ci-dessus, l'air utilisé peut être remplacé par tout autre comburant gazeux ou tout autre gaz de transport. De plus, en remarque, le comburant chargé en précurseur d'un catalyseur représente en masse une fraction seulement du fluide aéraulique entrant dans la chambre de combustion du moteur.

Dans toutes les réalisations, le dispositif catalytique pourrait finalement être quelconque, dès lors qu'il mélange un précurseur de catalyseur au sein d'un comburant, sous une forme qui permet son transport par le comburant. De plus, le dispositif de compression dudit mélange pourrait aussi présenter une autre forme que celles décrites dans les modes de réalisation.

L'invention porte aussi sur un procédé de réduction des émissions de particules d'un moteur, notamment un très gros moteur de navire, qui comprend la mise en œuvre des étapes suivantes :
- Mélange d'un précurseur de catalyseur avec un comburant, puis
- Augmentation de la pression dudit mélange, à une valeur de pression supérieure ou égale à 2 bars, voire supérieure ou égale à 4 bars, puis
- Injection dudit mélange sous pression dans un collecteur d'admission pour chambre de combustion d'un moteur.

Comme explicité précédemment, le procédé utilise un précurseur d'un catalyseur liquide de type organométallique. Une application très avantageuse consiste à utiliser un précurseur d'un catalyseur qui comprend du méthyl cyclopentadiényle manganèse tricarbonyle ou est uniquement constitué de ce composant. Avantageusement, la concentration de l'organométallique dans le précurseur de catalyseur est supérieure ou égale à 99% du poids total du précurseur de catalyseur. Cette solution atteint bien les objectifs recherchés et permet de réduire, voire supprimer, toutes les émissions de particules d'un moteur, particulièrement un très grand moteur turbo diesel pour navire.

La solution décrite présente l'avantage d'une évaporation efficace du précurseur de catalyseur produite par le comburant, qui devient ainsi le vecteur de transport des vapeurs du catalyseur. En variante, le comburant est le vecteur de transport d'un précurseur d'un catalyseur sous forme liquide, notamment sous forme de gouttelettes, le précurseur de catalyseur pouvant notamment se trouver en tout ou partie sous la forme de gouttelettes, avant d'être finalement totalement évaporé et idéalement réparti dans le comburant au niveau du dispositif de compression.

Selon un troisième mode de réalisation, illustré en pointillé dans les figures 1 et 3 et mis en œuvre alternativement (non supporté par l'invention) ou en combinaison du premier ou du deuxième mode de réalisation précédemment exposés, le moteur 1 pour navire est caractérisé en ce qu'il comprend le collecteur d'échappement 4 et au moins un dispositif catalytique 10' comprenant un moyen d'injection par compression, notamment par air comprimé ou par eau, au moins configuré pour assurer la projection sous forme de gouttelettes d'un précurseur de catalyseur liquide composé d'un organométallique, notamment un composant méthyl cyclopentadiényle manganèse tricarbonyle, et son mélange avec des gaz d'échappement compris dans le collecteur d'échappement 4.

Une telle projection sous compression, aussi qualifiée de « nébulisation » ou « atomisation », correspond à la transformation à froid du précurseur de catalyseur liquide en un nuage, ou brouillard, de gouttelettes. Notamment, selon une caractéristique optionnelle, le dispositif catalytique 10' peut être configuré pour produire des gouttelettes présentant une dimension de l'ordre de 10 à 500 µm, notamment 20 à 100 µm.

Tel qu'exposé en référence à la figure 1, le moteur 1 comprend le collecteur d'admission 2 et la chambre de combustion 3 comprenant une pluralité de cylindres. Il comprend, en outre, une turbosoufflante 9 qui a fonction de dispositif de compression et est actionnée par les gaz d'échappement guidés par la conduite d'échappement 5 du collecteur d'échappement 4 vers la turbosoufflante 9. Alternativement, et tel qu'exposé en référence à la figure 3, le moteur 1 peut comprendre les deux turbocompresseurs 19 montés en série et l'échangeur de chaleur 18.

Selon le présent mode de réalisation, le dispositif catalytique 10' est au moins configuré pour assurer l'injection du précurseur de catalyseur en aval de la chambre de combustion 3.

Selon une caractéristique préférentielle, le dispositif catalytique 10' est configuré de sorte à injecter le précurseur de catalyseur directement au niveau du collecteur d'échappement 4 en au moins un site d'injection 21. Notamment, le dispositif catalytique 10' peut être configuré de sorte à injecter le précurseur de catalyseur immédiatement au niveau de la sortie des gaz d'échappement d'au moins l'un des cylindres du moteur 1.

Selon un exemple particulier de réalisation, non représenté, le dispositif catalytique 10' peut être configuré de sorte à injecter le précurseur de catalyseur directement au niveau du collecteur d'échappement 4 en une pluralité de sites d'injection 21. En particulier, le moteur 1 peut comprendre autant de sites d'injection 21 que de cylindres.

Particulièrement, le dispositif catalytique 10' peut comprendre au moins une conduite d'alimentation 22 configurée pour assurer la circulation du précurseur catalytique vers le ou les site(s) d'injection 21.

L'objectif d'un tel mode de réalisation est de réaliser le post-traitement des gaz d'échappement à une température favorable à la capacité catalytique d'oxydation du carbone du précurseur de catalyseur, qui est devenu instantanément catalyseur. Notamment, le dispositif catalytique 10' peut être configuré de sorte à injecter le précurseur de catalyseur au niveau d'une zone du collecteur d'échappement 4 présentant une température de l'ordre de 450 à 600°C, notamment de l'ordre de 550 à 600°C, par exemple environ 580°C.

Selon une caractéristique du troisième mode de réalisation, le moyen d'injection du dispositif catalytique 10' peut avantageusement comprendre au moins une buse d'injection, notamment une buse de nébulisation, du précurseur de catalyseur à l'état liquide. Une telle buse d'injection est disposée au niveau de l'au moins un site d'injection 21, dans le collecteur d'échappement 4. Tel que précédemment exposé, le moyen d'injection peut comprendre une pluralité de buses d'injection, par exemple chacune disposée au niveau d'un site d'injection 21.

Selon un exemple particulier de réalisation, une telle buse d'injection est une buse bi-fluide configurée pour assurer simultanément l'injection du précurseur de catalyseur et d'un fluide, notamment de l'air comprimé ou de l'eau, dans le collecteur d'échappement 4.

De manière optionnelle mais avantageuse, le dispositif catalytique 10' peut comprendre un dispositif de refroidissement, non représenté, du moyen d'injection, notamment d'au moins la buse d'injection. Un tel dispositif de refroidissement peut, selon un exemple non limitatif, assurer le refroidissement du moyen d'injection par l'intermédiaire d'un fluide identique au fluide injecté dans le collecteur d'échappement 4, à savoir de l'air comprimé ou de l'eau.

Un tel fluide a alors, d'une part, fonction de vecteur d'injection et participe à la nébulisation du précurseur de catalyseur liquide, et, d'autre part, fonction de refroidissement du moyen d'injection. Un tel arrangement permet avantageusement de prévenir la réaction du précurseur de catalyseur ou sa dégradation au sein du moyen d'injection, par exemple de la buse d'injection, et donc le dysfonctionnement de cette dernière.

Le précurseur de catalyseur est ainsi projeté à l'état liquide sous forme de gouttelettes par le moyen d'injection, lesquelles, une fois dans le collecteur d'échappement 4, sont instantanément vaporisées, ou « *flashées* » selon le terme dérivé de l'anglais, de par les conditions de températures du collecteur d'échappement 4 permettant que le précurseur de catalyseur réagisse pour former le catalyseur.

La circulation des gaz d'échappement dans le collecteur d'échappement 4 permet alors avantageusement le mélange des gaz d'échappement et du catalyseur ainsi que l'homogénéisation dudit mélange. Il en va de même pour la circulation de ce mélange dans la turbosoufflante 9, afin d'actionner celle-ci.

Selon une variante de ce troisième mode de réalisation, le moteur 1 peut comprendre au sein du dispositif catalytique 10, 10':
- une première sous-unité du dispositif catalytique 10' comprenant le moyen d'injection par compression et configurée pour assurer la projection sous forme de gouttelettes d'un précurseur de catalyseur composé d'un organométallique, notamment un composant méthyl cyclopentadiényle manganèse tricarbonyle, et son mélange avec des gaz d'échappement compris dans le collecteur d'échappement 4;
- une deuxième sous-unité du dispositif catalytique 10, mettant en œuvre le mélange du précurseur de catalyseur avec le comburant sous forme gazeuse et agencé en amont du dispositif de compression de sorte que ce dispositif de compression augmente la pression du mélange comprenant le comburant et le précurseur de catalyseur à une valeur supérieure ou égale à 2 bars, voire supérieure ou égale à 4 bars, cette valeur de pression étant mesurée au niveau de son entrée dans le collecteur d'admission 2.

A noter que, si un tel exemple particulier du dispositif catalytique est représenté, à des fins de clarté, en deux sous-unités 10, 10' aux positionnements distincts sur les figures 1 et 3, celles-ci sont comprises dans le même dispositif catalytique.

Selon une telle variante, la deuxième sous-unité du dispositif catalytique 10 présente les caractéristiques du dispositif catalytique 10 tel qu'exposé précédemment en référence au premier ou au deuxième mode de réalisation, la description desdits modes de réalisation s'applique de ce fait *mutatis mutandis* à la présente variante. Notamment, une telle deuxième sous-unité 10 du dispositif catalytique peut comprendre, tel qu'exposé précédemment, le sous-ensemble hydraulique, non représenté, comprenant un réservoir pour stocker le précurseur de catalyseur, et le sous-ensemble aéraulique, dans lequel le précurseur de catalyseur liquide peut être évaporé et mélangé dans de l'air.

Particulièrement, le sous-ensemble hydraulique peut être commun à la première sous-unité 10' et à la deuxième sous-unité 10 du dispositif catalytique.

Notamment, la première sous-unité du dispositif catalytique 10' peut alors comprendre la conduite d'alimentation 22, laquelle relie le sous-ensemble hydraulique à au moins l'un des sites d'injection 21 et est configurée pour permettre la circulation du précurseur de catalyseur depuis le sous-ensemble hydraulique vers le ou les sites d'injection 21.

Le moteur 1 peut, en outre, tel qu'exposé précédemment, être automatiquement piloté par l'unité de contrôle en fonction d'informations transmises par les capteurs du moteur 1. Notamment, de telles informations peuvent être relatives au niveau de charge du moteur, à sa vitesse, au couple moteur, à la pression en tête de cylindre, à la température au niveau du collecteur d'échappement etc.

De manière particulière, selon le mode de réalisation ou la variante mise en œuvre, le moteur 1 peut être automatiquement piloté par l'unité de contrôle de sorte que le dispositif catalytique mette en œuvre, selon le besoin, tout ou partie des options suivantes :
- l'injection par projection sous forme de gouttelettes du précurseur de catalyseur liquide composé d'un organométallique, notamment un composant méthyl cyclopentadiényle manganèse tricarbonyle, et son mélange avec des gaz d'échappement compris dans le collecteur d'échappement 4, notamment tel qu'exposé en référence au troisième mode de réalisation;
- le mélange du précurseur de catalyseur avec le comburant en amont du dispositif de compression de sorte que ce dispositif de compression augmente la pression du mélange comprenant le comburant et le précurseur de catalyseur à une valeur supérieure ou égale à 2 bars, voire supérieure ou égale à 4 bars, cette valeur de pression étant mesurée au niveau de son entrée dans le collecteur d'admission 2, tel qu'exposé en référence aux premier ou deuxième modes de réalisation.

De manière avantageuse, le dispositif catalytique 10' peut être configuré de sorte à injecter une quantité de catalyseur comprise entre 0,5 et 15 milligrammes de catalyseur par m³ de gaz d'échappement. Par exemple, pour un précurseur de catalyseur comprenant un composant méthyl cyclopentadiényle manganèse tricarbonyle, le dispositif catalytique 10' peut être configuré de sorte à injecter une quantité de précurseur de catalyseur comprise entre 2 et 60 milligrammes par m³ de gaz d'échappement. Particulièrement, le pilotage du moteur peut intégrer une régulation automatique de la quantité de catalyseur utilisée et/ou de la taille des gouttelettes projetées.

L'injection du précurseur de catalyseur postcombustion contribue ainsi à agir avec le carbone présent dans le collecteur d'échappement de façon à réaliser son oxydation thermique presque complète. Cet effet conduit à détruire les imbrûlés particulaires et gazeux par leur gazéification, transformant le carbone disponible en dioxyde de carbone.

## Revendications

1. Moteur (1) pour navire propulsé par un très grand moteur turbo diesel, notamment un moteur de puissance comprise entre 1 MW et 100 MW, comprenant un collecteur d'admission (2) et un dispositif catalytique (10) mettant en œuvre le mélange d'un précurseur de catalyseur qui comprend un composé organométallique, notamment un composant méthyl cyclopentadiényle manganèse tricarbonyle, avec un comburant, le dispositif catalytique (10) étant agencé en amont d'un dispositif de compression, lequel est disposé en amont du collecteur d'admission (2), de sorte que ce dispositif de compression augmente la pression du mélange comprenant le comburant et le précurseur de catalyseur à une valeur supérieure ou égale à 2 bars, voire supérieure ou égale à 4 bars, cette valeur de pression étant mesurée au niveau de son entrée dans le collecteur d'admission (2), **caractérisé en ce que** le moteur :
- est un moteur turbo comprenant une turbosoufflante (9), le dispositif de compression étant la turbosoufflante (9) et le dispositif catalytique (10) étant positionné en amont de la turbosoufflante (9) de sorte que ledit mélange comprenant le comburant et le précurseur de catalyseur est conduit de la sortie du dispositif catalytique (10) à la turbosoufflante (9), où il subit une augmentation de pression, puis de la turbosoufflante (9) vers le collecteur d'admission (2);
- comprend un échangeur de chaleur réfrigérant (8) disposé entre la turbosoufflante (9) et le collecteur d'admission (2) pour refroidir le mélange comprenant le comburant et le précurseur de catalyseur à une valeur de température inférieure ou égale à 50°C, voire inférieure ou égale à 40 °C ;
- est configuré pour utiliser une quantité de catalyseur comprise entre 5 et 50 décagrammes par tonne de combustible, correspondant à une quantité de 20 à 200 décagrammes de précurseur de catalyseur par tonne de combustible.

2. Moteur (1) pour navire selon la revendication précédente, **caractérisé en ce que** le dispositif catalytique (10) comprend un media comprenant des fibres de celluloses et/ou des fibres tissées, comme certains cotons, sur lequel le précurseur de catalyseur est injecté sous forme liquide et est évaporé et mélangé à un comburant au contact dudit media.

3. Moteur (1) pour navire selon l'une des revendications précédentes, **caractérisé en ce que** le dispositif catalytique (10) comprend un réservoir de précurseur de catalyseur liquide, et est configuré pour l'évaporation au moins partielle dudit précurseur de catalyseur au sein du comburant.

4. Moteur (1) pour navire selon la revendication précédente, **caractérisé en ce que** le précurseur de catalyseur liquide comprend une concentration d'organométallique ou de méthyl cyclopentadiényle manganèse tricarbonyle supérieure ou égale à 90% du poids total du précurseur de catalyseur.

5. Moteur (1) pour navire selon l'une des revendications précédentes, **caractérisé en ce qu'**il est un moteur de puissance comprise entre 1 MW et 100 MW.

6. Moteur (1) pour navire selon l'une des revendications précédentes, comprenant, en outre, un collecteur d'échappement (4) et au moins un dispositif catalytique (10') configuré pour assurer l'injection d'un précurseur de catalyseur liquide composé d'un organométallique, notamment un composant méthyl cyclopentadiényle manganèse tricarbonyle, en aval de la chambre de combustion (3), ledit dispositif catalytique (10') comprenant un moyen d'injection par compression, notamment par air comprimé ou par eau, au moins configuré pour assurer la projection sous forme de gouttelettes du précurseur de catalyseur liquide et son mélange avec des gaz d'échappement compris dans le collecteur d'échappement (4).

7. Moteur (1) pour navire selon la revendication précédente, dans lequel le dispositif catalytique (10') configuré pour assurer l'injection d'un précurseur de catalyseur liquide en aval de la chambre de combustion (3) est configuré pour produire des gouttelettes présentant une dimension de l'ordre de 10 à 500 µm, notamment 20 à 100 µm.

8. Moteur (1) pour navire selon la revendication 6 ou 7, dans lequel le dispositif catalytique (10') configuré pour assurer l'injection d'un précurseur de catalyseur liquide en aval de la chambre de combustion (3) est configuré de sorte à injecter le précurseur de catalyseur au niveau d'une zone du collecteur d'échappement (4) présentant une température de l'ordre de 450 à 600°C, notamment de l'ordre de 550 à 600°C, par exemple environ 580°C.

9. Moteur (1) pour navire selon l'une des revendications 6 à 8, dans lequel le dispositif catalytique (10') configuré pour assurer l'injection d'un précurseur de catalyseur liquide en aval de la chambre de combustion (3) (10') comprend un dispositif de refroidissement du moyen d'injection apte à assurer le refroidissement du moyen d'injection par l'intermédiaire d'un fluide identique au fluide injecté dans le collecteur d'échappement (4), à savoir notamment de l'air comprimé ou de l'eau.

10. Moteur (1) pour navire selon l'une des revendications 1 à 5, comprenant, en outre, un collecteur d'échappement (4), le dispositif catalytique (10, 10') comprenant :
- une première sous-unité du dispositif catalytique (10') comprenant un moyen d'injection par compression configurée pour assurer la projection sous forme de gouttelettes d'un précurseur de catalyseur composé d'un organométallique, notamment un composant méthyl cyclopentadiényle manganèse tricarbonyle, en aval de la chambre de combustion (3) et son mélange avec des gaz d'échappement compris dans le collecteur d'échappement (4) ; et
- une deuxième sous-unité du dispositif catalytique (10), mettant en œuvre le mélange du précurseur de catalyseur avec le comburant sous forme gazeuse et agencé en amont du dispositif de compression de sorte que ce dispositif de compression augmente la pression du mélange comprenant le comburant et le précurseur de catalyseur à une valeur supérieure ou égale à 2 bars, voire supérieure ou égale à 4 bars, cette valeur de pression étant mesurée au niveau de son entrée dans le collecteur d'admission (2).

11. Procédé de réduction des émissions de particules d'un moteur (1) de navire propulsé par un très grand moteur turbo diesel, notamment un moteur de puissance comprise entre 1 MW et 100 MW, **caractérisé en ce qu'**il comprend la mise en œuvre des étapes suivantes :
- Mélange d'un précurseur de catalyseur qui comprend un composé organométallique, notamment un composant méthyl cyclopentadiényle manganèse tricarbonyle, avec un comburant par un dispositif catalytique (10) de sorte à utiliser une quantité de catalyseur comprise entre 5 et 50 décagrammes par tonne de combustible, correspondant à une quantité de 20 à 200 décagrammes de précurseur de catalyseur par tonne de combustible, puis
- Augmentation de la pression dudit mélange par un dispositif de compression, à une valeur de pression supérieure ou égale à 2 bars, voire supérieure ou égale à 4 bars et refroidissement du mélange comprenant le comburant et le précurseur de catalyseur à une valeur de température inférieure ou égale à 50°C, voire inférieure ou égale à 40 °C, puis
- Injection dudit mélange sous pression dans un collecteur d'admission (2) pour une chambre de combustion d'un moteur (1).

## Patentansprüche

1. Motor (1) für ein Schiff, das von einem sehr großen Turbo-Dieselmotor angetrieben wird, insbesondere einem Motor mit einer Leistung zwischen 1 MW und 100 MW, umfassend einen Ansaugkrümmer (2), eine katalytische Vorrichtung (10), die das Mischen eines Katalysatorvorläufers, der eine organometallische Verbindung, insbesondere eine Methylcyclopentadienylmangan-tricarbonyl-Komponente umfasst, mit einem Brennstoffoxidationsmittel implementiert, und dadurch, dass die katalytische Vorrichtung (10) stromaufwärts einer Kompressionsvorrichtung angeordnet ist, die stromaufwärts des Ansaugkrümmers (2) angeordnet ist, so dass diese Kompressionsvorrichtung den Druck des Gemisches, das das Brennstoffoxidationsmittel und den Katalysatorvorläufer umfasst, auf einen Wert größer oder gleich 2 bar, oder sogar größer oder gleich 4 bar erhöht, wobei dieser Druckwert an seinem Eintritt in den Ansaugkrümmer (2) gemessen wird, **dadurch gekennzeichnet, dass** der Motor: :
- ein turbogeladener Motor ist, der einen Turbolader (9) umfasst, wobei die Kompressionsvorrichtung der Turbolader (9) ist, und die katalytische Vorrichtung (10) stromaufwärts des Turboladers (9) positioniert ist, so dass das besagte Gemisch, das das Brennstoffoxidationsmittel und den Katalysatorvorläufer umfasst, vom Ausgang der katalytischen Vorrichtung (10) zum Turbolader (9) geleitet wird, wo es eine Druckerhöhung erfährt, dann vom Turbolader (9) zum Ansaugkrümmer (2);
- einen Ladeluftkühler-Wärmetauscher (8) umfasst, der zwischen dem Turbolader (9) und dem Ansaugkrümmer (2) angeordnet ist, um das Gemisch, das das Brennstoffoxidationsmittel und den Katalysatorvorläufer umfasst, auf einen Temperaturwert kleiner oder gleich 50°C, oder sogar kleiner oder gleich 40°C zu kühlen;konfiguriert ist, eine Katalysatormenge zwischen 5 und 50 Dekagramm pro Tonne Kraftstoff zu verwenden, entsprechend einer Menge von 20 bis 200 Dekagramm Katalysatorvorläufer pro Tonne Kraftstoff.

2. Motor (1) für ein Schiff nach dem vorhergehenden Anspruch, **dadurch gekennzeichnet, dass** die katalytische Vorrichtung (10) ein Medium umfasst, das Zellulosefasern und/oder gewebte Fasern, wie bestimmte Baumwollsorten, umfasst, auf das der Katalysatorvorläufer in flüssiger Form eingespritzt und verdampft und mit einem Brennstoffoxidationsmittel in Kontakt mit dem besagten Medium gemischt wird.

3. Motor (1) für ein Schiff nach einem der vorhergehenden Ansprüche, **dadurch gekennzeichnet, dass** die katalytische Vorrichtung (10) einen Tank mit flüssigem Katalysatorvorläufer umfasst und für die zumindest teilweise Verdampfung des besagten Katalysatorvorläufers im Brennstoffoxidationsmittel konfiguriert ist.

4. Motor (1) für ein Schiff nach dem vorhergehenden Anspruch, **dadurch gekennzeichnet, dass** der flüssige Katalysatorvorläufer eine organometallische Verbindung oder Methylcyclopentadienylmangan-tricarbonyl-Konzentration größer oder gleich 90% des Gesamtgewichts des Katalysatorvorläufers umfasst.

5. Motor (1) für ein Schiff nach einem der vorhergehenden Ansprüche, **dadurch gekennzeichnet, dass** er ein Motor mit einer Leistung zwischen 1 MW und 100 MW ist.

6. Motor (1) für ein Schiff nach einem der vorhergehenden Ansprüche, ferner umfassend einen Abgaskrümmer (4) und mindestens eine katalytische Vorrichtung (10'), die konfiguriert ist, um die Einspritzung eines flüssigen Katalysatorvorläufers, der aus einer organometallischen Verbindung, insbesondere einer Methylcyclopentadienylmangan-tricarbonyl-Komponente besteht, stromabwärts der Brennkammer (3) sicherzustellen, wobei die besagte katalytische Vorrichtung (10') ein Einspritzmittel durch Kompression, insbesondere durch Druckluft oder durch Wasser, umfasst, das zumindest konfiguriert ist, um die Projektion in Form von Tröpfchen des flüssigen Katalysatorvorläufers und dessen Mischung mit Abgasen, die im Abgaskrümmer (4) enthalten sind, sicherzustellen.

7. Motor (1) für ein Schiff nach dem vorhergehenden Anspruch, wobei die katalytische Vorrichtung (10'), die konfiguriert ist, um die Einspritzung eines flüssigen Katalysatorvorläufers stromabwärts der Brennkammer (3) sicherzustellen, konfiguriert ist, um Tröpfchen mit einer Dimension in der Größenordnung von 10 bis 500 µm, insbesondere 20 bis 100 µm, zu erzeugen.

8. Motor (1) für ein Schiff nach Anspruch 6 oder 7, wobei die katalytische Vorrichtung (10'), die konfiguriert ist, um die Einspritzung eines flüssigen Katalysatorvorläufers stromabwärts der Brennkammer (3) sicherzustellen, so konfiguriert ist, dass sie den Katalysatorvorläufer in einer Zone des Abgaskrümmers (4) einspritzt, die eine Temperatur in der Größenordnung von 450 bis 600°C, insbesondere in der Größenordnung von 550 bis 600°C, zum Beispiel etwa 580°C aufweist.

9. Motor (1) für ein Schiff nach einem der Ansprüche 6 bis 8, wobei die katalytische Vorrichtung (10'), die konfiguriert ist, um die Einspritzung eines flüssigen Katalysatorvorläufers stromabwärts der Brennkammer (3) sicherzustellen, eine Kühlvorrichtung für das Einspritzmittel umfasst, die in der Lage ist, die Kühlung des Einspritzmittels mittels eines Fluids sicherzustellen, das identisch mit dem in den Abgaskrümmer (4) eingespritzten Fluid ist, nämlich insbesondere Druckluft oder Wasser.

10. Motor (1) für ein Schiff nach einem der Ansprüche 1 bis 5, ferner umfassend einen Abgaskrümmer (4), wobei die katalytische Vorrichtung (10, 10') umfasst:
• eine erste Untereinheit der katalytischen Vorrichtung (10'), die ein Einspritzmittel durch Kompression umfasst, das konfiguriert ist, um die Projektion in Form von Tröpfchen eines Katalysatorvorläufers, der aus einer organometallischen Verbindung, insbesondere einer Methylcyclopentadienylmangan-tricarbonyl-Komponente besteht, stromabwärts der Brennkammer (3) und dessen Mischung mit Abgasen, die im Abgaskrümmer (4) enthalten sind, sicherzustellen; und
• eine zweite Untereinheit der katalytischen Vorrichtung (10), die das Mischen des Katalysatorvorläufers mit dem Oxidationsmittel in gasförmiger Form implementiert und stromaufwärts der Kompressionsvorrichtung angeordnet ist, so dass diese Kompressionsvorrichtung den Druck des Gemisches, das das Oxidationsmittel und den Katalysatorvorläufer umfasst, auf einen Wert größer oder gleich 2 bar, oder sogar größer oder gleich 4 bar erhöht, wobei dieser Druckwert an seinem Eintritt in den Ansaugkrümmer (2) gemessen wird.

11. Verfahren zur Reduzierung von Partikelemissionen eines Schiffsmotors (1), der von einem sehr großen Turbo-Dieselmotor angetrieben wird, insbesondere einem Motor mit einer Leistung zwischen 1 MW und 100 MW, **dadurch gekennzeichnet, dass** es die Implementierung der folgenden Schritte umfasst:
- Mischen eines Katalysatorvorläufers, der eine organometallische Verbindung, insbesondere eine Methylcyclopentadienylmangan-tricarbonyl-Komponente umfasst, mit einem Oxidationsmittel durch eine katalytische Vorrichtung (10), um eine Katalysatormenge zwischen 5 und 50 Dekagramm pro Tonne Kraftstoff zu verwenden, entsprechend einer Menge von 20 bis 200 Dekagramm Katalysatorvorläufer pro Tonne Kraftstoff, dann
- Erhöhung des Drucks des besagten Gemisches durch eine Kompressionsvorrichtung auf einen Druckwert größer oder gleich 2 bar, oder sogar größer oder gleich 4 bar und Kühlung des Gemisches, das das Oxidationsmittel und den Katalysatorvorläufer umfasst, auf einen Temperaturwert kleiner oder gleich 50°C, oder sogar kleiner oder gleich 40°C, dann
- Einspritzung des besagten Gemisches unter Druck in einen Ansaugkrümmer (2) für eine Brennkammer eines Motors (1).

## Claims

1. An engine (1) for a ship propelled by a very large turbo diesel engine, notably an engine with power between 1 MW and 100 MW, comprising an intake manifold (2) a catalytic device (10) implementing the mixing of a catalyst precursor which comprises an organometallic compound, notably a methylcyclopentadienyl manganese tricarbonyl component, with a fuel oxidizer, and in that the catalytic device (10) being arranged upstream of a compression device, which is disposed upstream of the intake manifold (2), so that this compression device increases the pressure of the mixture comprising the fuel oxidizer and the catalyst precursor to a value greater than or equal to 2 bar, or even greater than or equal to 4 bar, this pressure value being measured at its entry into the intake manifold (2), **characterized in that** the engine :
- is a turbocharged engine comprising a turboblower (9), the compression device being the turboblower (9), and the catalytic device (10) is positioned upstream of the turboblower (9) so that said mixture comprising the fuel oxidizer and the catalyst precursor is conducted from the outlet of the catalytic device (10) to the turboblower (9), where it undergoes an increase in pressure, then from the turboblower (9) to the intake manifold (2);
- comprises an intercooler heat exchanger (8) disposed between the turboblower (9) and the intake manifold (2) to cool the mixture comprising the fuel oxidizer and the catalyst precursor to a temperature value less than or equal to 50°C, or even less than or equal to 40°C;
- is configured to use a quantity of catalyst between 5 and 50 decagrams per ton of fuel, corresponding to a quantity of 20 to 200 decagrams of catalyst precursor per ton of fuel.

2. The engine (1) for a ship according to the preceding claim, **characterized in that** the catalytic device (10) comprises a medium comprising cellulose fibers and/or woven fibers, such as some cottons, onto which the catalyst precursor is injected in liquid form and is evaporated and mixed with a fuel oxidizer in contact with said medium.

3. The engine (1) for a ship according to one of the preceding claims, **characterized in that** the catalytic device (10) comprises a tank of liquid catalyst precursor and is configured for the at least partial evaporation of said catalyst precursor in the fuel oxidizer.

4. The engine (1) for a ship according to the preceding claim, **characterized in that** the liquid catalyst precursor comprises an organometallic compound or methylcyclopentadienyl manganese tricarbonyl concentration greater than or equal to 90% of the total weight of the catalyst precursor.

5. The engine (1) for a ship according to one of the preceding claims, **characterized in that** it is an engine with power between 1 MW and 100 MW.

6. The engine (1) for a ship according to one of the preceding claims, further comprising an exhaust manifold (4) and at least one catalytic device (10') configured to ensure injection of a liquid catalyst precursor composed of an organometallic, notably a methyl cyclopentadienyl manganese tricarbonyl component, downstream of the combustion chamber (3), said catalytic device (10') comprising an injection means by compression, notably by compressed air or by water, at least configured to ensure projection in the form of droplets of the liquid catalyst precursor and its mixing with exhaust gases comprised in the exhaust manifold (4).

7. The engine (1) for a ship according to the preceding claim, wherein the catalytic device (10') configured to ensure the injection of a liquid catalyst precursor downstream of the combustion chamber (3) is configured to produce droplets having a dimension of the order of 10 to 500 µm, notably 20 to 100 µm.

8. The engine (1) for a ship according to claim 6 or 7, wherein the catalytic device (10') configured to ensure injection of a liquid catalyst precursor downstream of the combustion chamber (3) is configured so as to inject the catalyst precursor at a zone of the exhaust manifold (4) having a temperature of the order of 450 to 600°C, notably of the order of 550 to 600°C, for example about 580°C.

9. The engine (1) for a ship according to one of claims 6 to 8, wherein the catalytic device (10') configured to ensure injection of a liquid catalyst precursor downstream of the combustion chamber (3) comprises a cooling device for the injection means capable of ensuring cooling of the injection means by means of a fluid identical to the fluid injected into the exhaust manifold (4), namely notably compressed air or water.

10. The engine (1) for a ship according to one of claims 1 to 5, further comprising an exhaust manifold (4), the catalytic device (10, 10') comprising:
• a first sub-unit of the catalytic device (10') comprising an injection means by compression configured to ensure projection in the form of droplets of a catalyst precursor composed of an organometallic, notably a methyl cyclopentadienyl manganese tricarbonyl component, downstream of the combustion chamber (3) and its mixing with exhaust gases comprised in the exhaust manifold (4); and
• a second sub-unit of the catalytic device (10), implementing the mixing of the catalyst precursor with the oxidizer in gaseous form and arranged upstream of the compression device so that this compression device increases the pressure of the mixture comprising the oxidizer and the catalyst precursor to a value greater than or equal to 2 bars, or even greater than or equal to 4 bars, this pressure value being measured at its entry into the intake manifold (2).

11. A method of reducing emissions of particles from a ship engine (1), propelled by a very large turbo diesel engine, notably an engine with power between 1 MW and 100 MW, **characterized in that** it comprises implementing the following steps:
- mixing of a catalyst precursor which comprises an organometallic compound, notably a methyl cyclopentadienyl manganese tricarbonyl component, with an oxidizer by a catalytic device (10) so as to use a quantity of catalyst between 5 and 50 decagrams per ton of fuel, corresponding to a quantity of 20 to 200 decagrams of catalyst precursor per ton of fuel, then
- increasing the pressure of said mixture by a compression device, to a pressure value greater than or equal to 2 bars, or even greater than or equal to 4 bars and cooling the mixture comprising the oxidizer and the catalyst precursor to a temperature value less than or equal to 50°C, or even less than or equal to 40°C, then
- injection of said mixture under pressure into an intake manifold (2) for a combustion chamber of an engine (1).
